**Europäisches Patentamt**

(19) **European Patent Office**

**Office européen des brevets**

(11) Publication number : **0 368 893 B1**

(12) # EUROPEAN PATENT SPECIFICATION

(45) Date of publication of patent specification :
24.06.92 Bulletin 92/26

(51) Int. Cl.⁵ : **F16H 1/44**

(21) Application number : **88906195.8**

(22) Date of filing : **27.06.88**

(86) International application number :
**PCT/SE88/00355**

(87) International publication number :
**WO 88/10378 29.12.88 Gazette 88/28**

(54) **A DEVICE TO OPPOSE RELATIVE ROTATIONAL MOVEMENT BETWEEN TWO ROTATABLE SHAFTS.**

(30) Priority : **24.06.87 SE 8702625**

(43) Date of publication of application :
**23.05.90 Bulletin 90/21**

(45) Publication of the grant of the patent :
**24.06.92 Bulletin 92/26**

(84) Designated Contracting States :
**AT BE CH DE FR GB IT LI NL SE**

(56) References cited :
**FR-A- 2 434 969**
**SE-B- 344 034**
**US-A- 3 987 689**
**US-A- 4 445 400**

(73) Proprietor : **Sigvard Johansson Patent AB**
**Solhult 5380 Grunnebo**
**S-462 93 Vänersborg (SE)**

(72) Inventor : **Johansson, Sigvard**
**Solhult 5380 Grunnebo**
**S-462 92 Vänersborg (SE)**

(74) Representative : **Mossmark, Anders et al**
**Albihn West AB Box 142**
**S-401 22 Göteborg (SE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a device to oppose relative rotational movement between two rotatable shafts, comprising at least one first braking means rotating together with one of the mentioned shafts, and at least one second braking means rotating together with, which is so adapted that the resistance of the pistons against back pressing at a least relative rotational speed between said shafts causes said axial displacement of the rotatable element and consequently a braking contact between the braking means, the other of said shafts, said two braking means being designed to be adjusted between a releasing position and a contact position so, that upon a relative rotational movement between the two shafts the braking means can be brought into a braking contact with each other in order to oppose said relative rotational movement.

Background:

It is known from FRA-2434969 to use limited slip differentials to detect differences in rotational speed between two shafts, containing braking discs arranged to rotate with each of the two shafts, and to be engaged at a certain difference in rotational speed. In order to activate the engagement of the braking discs, a detection device is required to detect the difference in rotational speed, and to mechanically engage the braking discs. In previous arrangements the detection device has been complicated.

Technical problem:

The purpose of this invention is to present a simple but at the same time effective arrangement to oppose differences in speed between two rotating shafts and offer a solution to the driving and traction problems in the modern vehicle.

Solution:

The above mentioned purpose is according to this invention reached by means of a device, which is characterized therein that one of the shafts has an element which is rotatable together with said shaft and contains a inclined surface slightly deviating from a perpendicular position relative to the longitudinal axis of said shaft, in that said element is connected with the braking means which belongs to the mentioned shaft, which braking means follows the motions of said rotating element, in that said element is movable slightly axially relative to the braking means which belongs to the other shaft, in that, connected to and rotating with, at least one of the shafts there is a device comprising pistons, each one placed in a cylinder chamber with pressure fluid and movable relative to the above mentioned inclined surface, in that the cylinder chambers (18-23) communicate over an outlet (34, 35) for each chamber with a common channel (42) which communicates with a central outlet for discharge of pressure medium over a choking means (43) positioned in the central outlet, in that each outlet (34, 35) from the cylinder chambers has a non-return valve (40) provided to prevent a backstream of the pressure medium to the cylinder chambers and in that each piston is enable to cooperate with the mentioned inclined surface in such a way that upon a torsional movement of the inclined surface relative to the pistons the inclined surface is forcing at least one of the pistons into its pressure chamber against the pressurised fluid being pressurised to resist the piston movement caused by the slightest difference in relative speed variation between the two mentioned shafts, said torsional movement will cause the mentioned axial movement of the rotatable element and thereby a braking engagement between said braking means.

Drawing references:

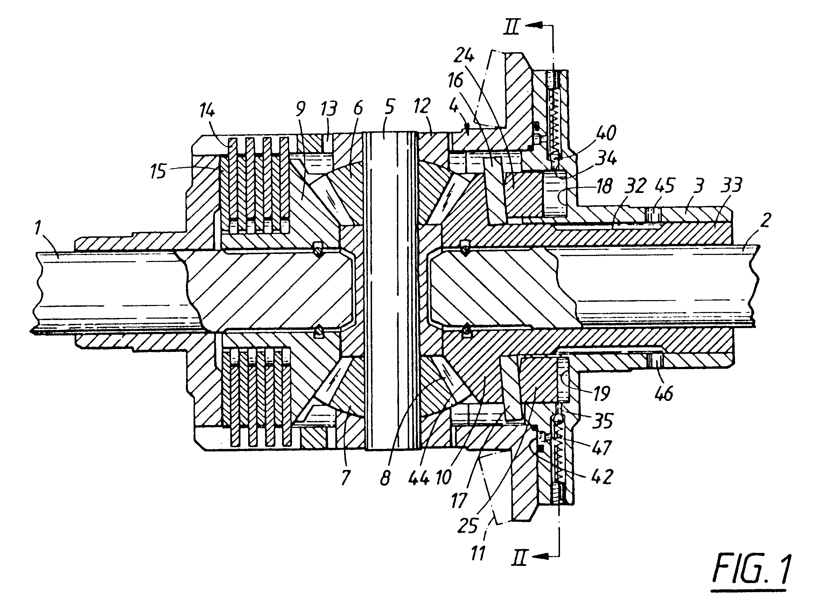

Embodiments of the invention will now be described by way of example and with reference to the accompanying drawings, in which fig 1 is showing a partly broken sectional view of a differential arrangement incorporating the invention,
fig 2 is showing a section II-II according to fig 1,
fig 3 is showing a section through the device in a second embodiment, and
fig 4 is showing a section through the device in a third embodiment.

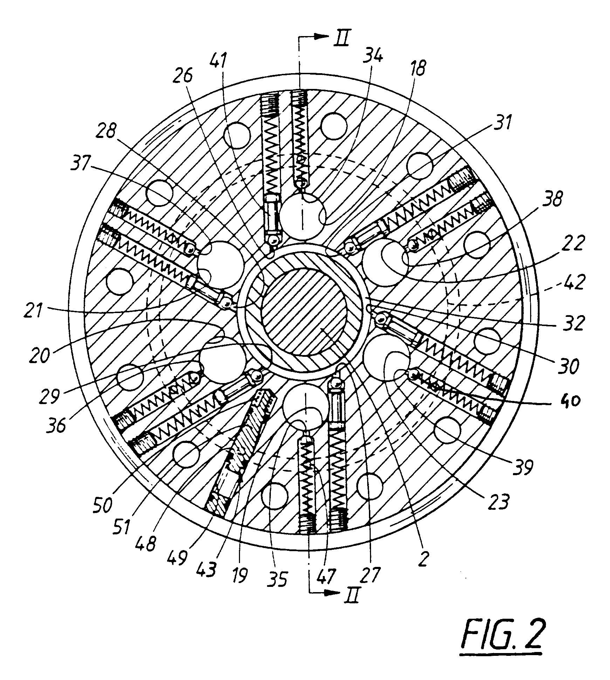

The arrangement in fig 1 is showing a conventional differential incorporating the device of this invention, the so called limited slip differential. The arrangement is showing the drive shafts 1, 2 rotatably fitted to the differential casing 4, enclosing differential pinion wheels 6, 7 rotatably fitted to the pinion shaft 5 in a right angle to the engaged rotatably differential crown wheels 9, 10 solidly fitted to the drive shafts 1, 2. This is typical arrangement in a motor driven vehicle where the drive shafts 1, 2 are driving the wheels of the vehicle. The differential arrangement is also rotatably fitted to its differential housing, not shown on this drawing. The dash-dotted line is showing the main crown wheel 11, which is fixed to the differential arrangement to rotate with it. The incoming pinion shaft, driving the crown wheel II and the differential arrangement is not shown. Inside the differential casing 4, the central part 12 is slightly movable sideways in the opening 13 where the differential pinion wheels 6, 7 are located on the shaft 5. Further more are braking elements solidly fixed to one side of the differential casing 4 and for each one of the braking elements there is a matching braking element fixed to the rotatable differential crown wheel 9, which is rotating with the outgoing drive shaft 1. Both differential crown wheels 9, 10 are also slightly movable sideways relative to the differential casing 4. By this arrangement the drive shaft 1, 2 are floating in splines inside the differential crown wheels 9, 10. Due to the invention, the differential crown wheel 10 is showing an angled surface 16 opposite its conical teeth 44. This surface 16 is slightly of 90 degree angle from the drive shaft 2. Further more there is a round even disc 17 that can move freely against the surface 16 inside the differential casing 4. Showing inside this casing (see also fig 2) are several evenly pitched piston chambers 18, 19, 20, 21, 22, 23 containing movable pistons 24, 25. The inside of the piston chambers is designed to contain pressurised fluid to force the pistons 24, 25 against the disc 17. To each of the pressure chambers 18-23 is an inlet 26, 27, 28, 29, 30, 31. Due to fig 1 inlets are communicating through the openings 45, 46 in to a grove 32 in the tubular part of the differential crown wheel 10. This inlet leads on to the pressure chambers 26-31 showing on fig 2. Connected to each of the chambers is on outlet opening 34, 35 containing a valve 40 to prevent pressurised fluid to re-enter the pressure chambers 26-31. In a similar way, pressure valves 41 are fitted in the inlet openings, allowing fluid to enter the pressure chambers but preventing the fluid to escape. Further, according to fig 2, there is a circular bore 42 connecting all outlets 47. Through the adjustable valve 43, the circular bore 42, is leading to a not pressurised oil pan or sump. In the shown case, the adjustable valve is a piston 48 movable in its bore 49 by the spring 50 that is forcing the valve outwards from centre. Due to influence from pressurised fluid, the valve could be moved inwards to change its operation. The cylindrical part on the valve 48 has a close fit in the bore 49 but there is also a conical part 51. Further more there is on opening in the bore 49 closed by cylindrical part of the valve 48, but when the valve is moved outwards and the conical part 51 is placed over the opening the pressurised fluid is allowed to escape from the pressure chambers. The pressurised fluid that regulates the valve, is let on to the bore 49, through a radial bore not shown. This bore could communicate with the grove 32 fig 1, and thereby employ the pressurised inlet fluid for regulation. Variations in the pressure of the inlet side 18-23 does not effect the valve operation. The inlet openings 26-31 are connected to a pressure source through the openings 45-46 to achieve constant pressure in the chambers. Due to the fact, that the sleeve 3 is rotating together with the differential casing when in motion, the pressure fluid is transferred in a known fashion, through a circular none rotating casing that is forming a seal over the sleeve 3 and surrounding the openings 45, 46. The pressure could be rather low and still create enough force to move the pistons 24, 25 against the angled surface 16. In stable running conditions, as driving straight ahead on an even road surface with even friction, both shafts 1, 2 are rotating with same revolution speed as the differential crown wheel 10, whereby no relative rotational movement is taking place between the differential crown wheel 10 and the pistons 24, 25. At this stage the braking elements 14, 15 are running free of each other, and are not showing any difference in relative rotational speed. At the time when a difference in rotational speed will appear between the shafts 1, 2 the differential casing will rotate together with the set of pistons 24, 25 around the shaft 2 relative to the angled surface 16, and if sufficient decrease will appear in the pressure fluid, depending on the sitting of the regulating valve, the pushing in of the pistons 24, 25 in to the pressure chambers will be opposed through the volume decrease created fluid media pressure. Due to the act that the none return valves are closed at the inlet side, the pressure fluid can only escape from the compressed chambers through outlets 34-39. At the same time, no pressure fluid can escape into another chamber which could have been expanding due to the closed valve. The pushing in of the pistons 24, 25 is taking place according to the rotation of the angled surface around the set of pistons. If the pressure fluid is high enough to resist the pushing in of the pistons, the differential crown wheel 10, will start moving sideways against the shaft 5, fitted into the slotted section 13. This will also move the differential pinion wheels 6, 7 together with the differential crown wheel 9 and its braking elements 15 against the braking elements 14 fitted into the differential casing 4. This will create a braking of the relative movement of the differential crown wheel 9, against the relative movement of the differential casing 4. The differential pinion wheels 6, 7 will hereby stop and lock both outgoing shafts 1, 2 to the same rotational speed.

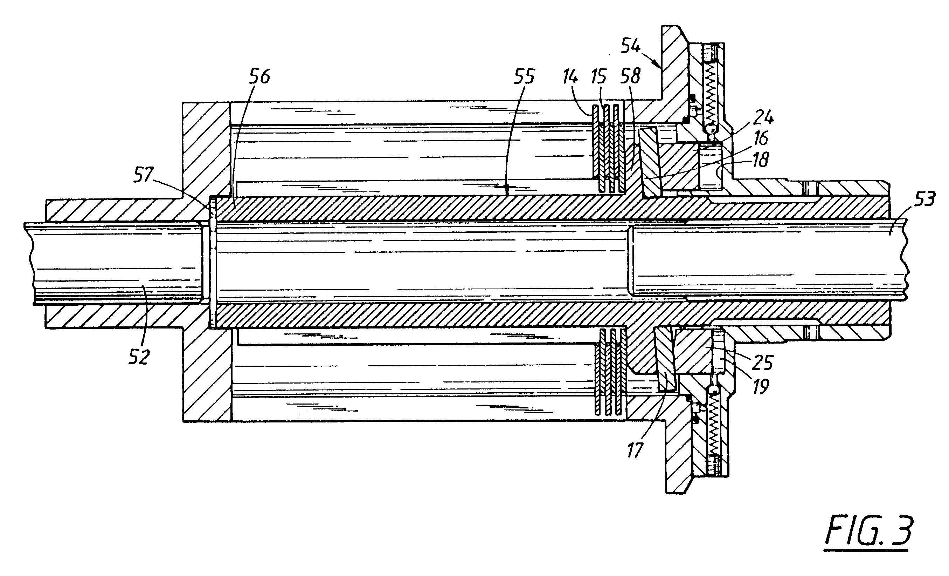

At the second embodiment according to fig 3 the device due to the invention is applied on two relative to each other rotatable shafts 52, 53 without any differential gears. This could be the case of an adjustable transmission between the front drive axle and the rear drive axle in a four wheel driven vehicle. In the case of bad traction on one of the axles, the device would brake the increase in rotation speed, and transfer the power to the none slipping axle. The device could be of the same design as in the previous example. Therefore the cut in fig 2 could represent the same cut in fig 3. The pistons 24, 25 and the pressure chambers 18-23 are located in a casing solidly fixed to the drive shaft 52, for instance coupled to the front axle of the vehicle. In the other casing 54, the other drive shaft 53 is rotatable through the tubular sleeve 55 which also can be moved sideways inside the casing 54. At the inside end of the sleeve 55, space is left 57 to allow the sleeve to move sideways, but still give enough support 56 to the drive shaft 53. The casing 54 is showing a set of braking elements 14, solidly fixed, to rotate with the casing 54 and the shaft 52.

The tubular sleeve 55 is also showing a set of braking elements 15, solidly fixed, to rotate with shaft 53. The amount of braking elements could vary due to the forces being transmitted. The sleeve 55 contains the angled surface 16 and washer 17. In a stable running position, both drive shaft 52, 53 are rotating with same revolutionary speed, whereby the sleeve 55 is in the right outside position and both seats of braking elements 14, 15 are running free of each other. By a change of the relative rotational speed, the angled surface 16 is turned relatively to the set of pistons 24, 25 and thereby trying to push the pistons in to pressure chambers 18, 19. Depending on the chosen setting of the valve 43 (fig 2) the system pressure will prevent the pistons 24, 25 to be pushed in, and the mentioned torsional movement will instead force the sleeve 55 sideways with its braking elements 15 to engage against the other braking elements 14 belonging to the casing 54, whereby the fastest rotating shaft will be slowed down and receive the same rotational speed as the other shaft.

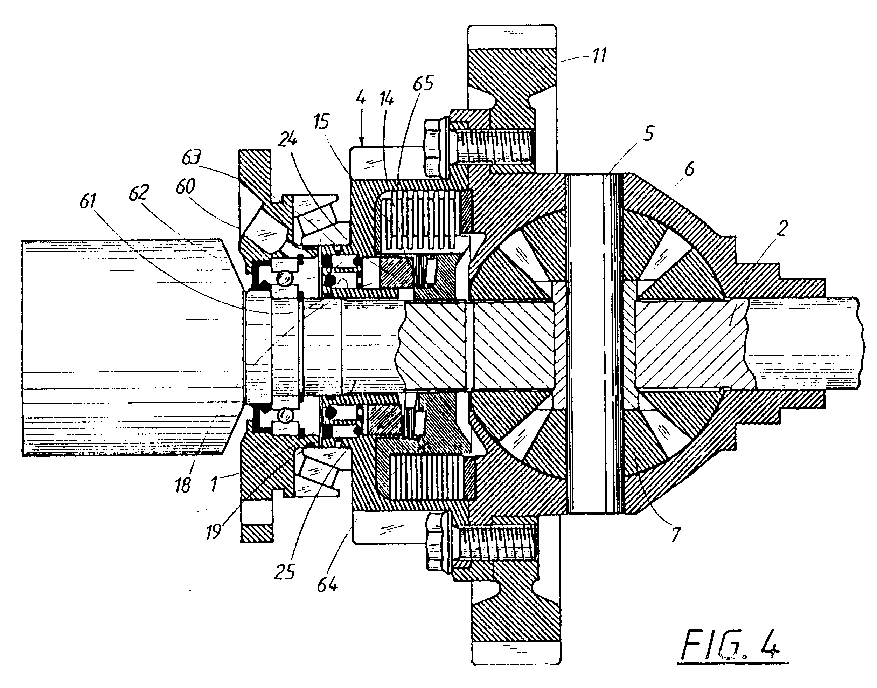

Fig 4 is showing the third embodiment according to the invention, applied in a gear box differential. The main features are similar to the first example, where a conventional differential is used in conjunction with the device due to the invention. Similar to the first example, there is a set of movable pistons 24, 25 inside pressure chambers, running in line with the shafts 1, 2. In principle the same fluid system could be used as in the first example, with its entrance 60 from the pressure source, and via the valve 61 communicating with the pressure chambers 18, 19 and additional valves only allowing inflow from the pressure source. In a similar fashion, each pressure chamber has got an outlet to the circular bore 42, and each of the outlets fitted with the valve only allowing outlet from the pressure chambers but preventing inflow.

The difference between the first and the third design, is that the rotatable unit 64 with the angled surface 65 is formed as a separate part, not attached to any of the differential crown wheels and separately sideways movable relative to the shaft 1 on splines and rotating together. The rotating unit 64 is also containing the braking elements 15, where as the other set of braking elements 14 is fixed to the differential casing 4.

According to this design, the whole device due to the invention, is fitted to one side of the differential casing, which means that the unit containing the pistons and the pistons chambers and the rotating unit with its angled surface and braking elements are fitted to the same side of the differential, whereby no sideways movement of the central unit is required, and that this sideways movement is only done by the rotatable unit containing its braking elements.

The principle function of the device due to the invention, is similar in both cases, that is to say that a certain variation in rotational movement between the rotatable unit and the differential casing is allowed up to a certain speed, before the pistons are being forced back into the pressure chambers. At the time when this speed is reached, a sideways movement is taking place of the rotatable unit 64, leading to the engagement of the braking elements, which leads to a reduction of the difference in rotational speed between the two shafts 1, 2. The invention described and shown on the drawings, is not only limited to those applications. Instead of moving the transmission pinion wheels and its shaft sideways due to fig 1, there could be a different arrangement where the angled surface could be part of a sleeve surrounding the differential casing and connecting one side of the braking elements and the whole assembly rotatable and movable sideways. The device due to the invention could also be used in other applications where variations in rotational speed is going to be opposed. To regulate the valves, a separate fluid could be used together with a separate pressure source, but by using the same fluid for the whole system, a good solution is presented to the transfer of fluid to the moving unit and the dumping of excess fluid. The braking elements could be either discs or shoes and the total amount could vary depending on the forces to be transferred. The regulating valve could be preset and fixed at a suitable pressure, but this would prevent regulating the resistance in the pistons and cut down on the flexibility of the device.

## Claims

1. A device to oppose relative rotational movement between two rotatable shafts (1, 2) comprising at least one first braking means (15) rotating together with one of the mentioned shafts, and at least one second braking means (14), rotating together with a rotatable housing (4) designed to cooperate so as to bring along the other of said shafts, said two braking means being designed to be adjusted between a releasing position and a contact position so, that upon a relative rotational movement between the two shafts the braking means can be brought into a braking contact with each other in order to oppose said relative rotational movement, **characterized in** that one of the shafts has an element (10, 58, 64) which is rotatable together with said shaft and contains an inclined surface slightly deviating from a perpendicular position relative to the longitudinal axis of said shaft, that said element is connected with the braking means (15) which belongs to the mentioned shaft, which braking means follows the motions of said rotating element, in that said element is movable slightly axially relative to the braking means (14), which belongs to the other shaft, in that, connected to and rotating with, at least one of the shafts there is a device comprising pistons (24, 25) each one placed in a cylinder chamber with pressure fluid and movable relative to the above mentioned inclined surface, in that the cylinder chambers (18-23) communicate over an outlet (34, 35) for each chamber with a common channel (42) which communicates with a central outlet for discharge of pressure medium over a choking means (43) positioned in the central outlet, in that each outlet (34, 35) from the cylinder chambers has a non-return valve (40) provided to prevent a backstream of the pressure medium to the cylinder chambers and in that each piston is enable to cooperate with the mentioned inclined surface in such a way that upon a torsional movement of the inclined surface relative to the pistons the inclined surface is forcing at least one of the pistons into its cylinder chamber (18-23) against the pressurised fluid being pressurised to resist the piston movement caused by the slightest difference in relative speed variation between the two mentioned shafts, said torsional movement will cause the mentioned axial movement of the rotatable element and thereby a braking engagement between said braking means.

2. A device according to claim 1, **characterized in** that the ability of the pistons for pressing action is controllable, involving a controllable axial displaceability of said element and consequently braking action of the braking means by said cooperation between the pistons and the oblique surface.

3. A device according to claim 1, **characterized in** that said rotatable element (64) carries said first braking means (15).

4. A device according to claim 1, **characterized in** that to each cylinder chamber (18-23) leads an inlet (26-30), provided with a non-return valve (41), arranged to allow a flow of pressure medium to the cylinder chamber, but prevents a backflow from the cylinder chamber.

5. A device according to claims 1 and 2, **characterized in** that said choking means (43) is controllable for the purpose of controlling the resistance of the pistons against return pressing action.


**Patentansprüche**

1. Vorrichtung zur Begrenzung der Relativbewegung zwischen zwei rotierenden Wellen (1, 2), mit wenigstens einem ersten Bremsmittel (15), welches mit wenigstens einem der erwähnten Wellen mitrotiert, und mit wenigstens einem zweiten Bremsmittel (14), welches zusammen mit einem rotierenden Gehäuse (4) rotiert, welches für eine Mitnahme der anderen Welle ausgebildet ist, wobei die beiden Bremsmittel zwischen einer freigebenden Stellung und einer wirksamen Stellung derart bewegbar sind, daß bei einer relativen Drehbewegung zwischen den beiden Wellen die Bremsmittel in Bremskontakt miteinander gebracht werden können, um die genannte Relativ-Drehbewegung zu begrenzen, dadurch gekennzeichnet, daß eine der beiden Wellen ein Element (10, 58, 64) aufweist, welches mit der erwähnten Welle mitdreht und eine Schrägfläche besitzt, die gegenüber einer rechtwinkligen Position in bezug auf die Längsachse der Welle leicht geneigt ist, daß das erwähnte Element mit dem Bremsmittel (15) verbunden ist, welches der erwähnten Welle zugeordnet ist und welches der Bewegung des erwähnten rotierenden Elementes folgt, daß das erwähnte Element geringfügig axial bewegbar ist, und zwar relativ zu den Bremsmittel (14), welches der anderen Welle zugeordnet ist, daß an wenigstens einer der Wellen und mit dieser umlaufend eine Einrichtung mit Kolben (24, 25) vorgesehen ist, von denen jeder in einer Zylinderkammer mit einem Druckmedium angeordnet und relativ zu der oben erwähnten geneigten Fläche bewegbar ist, daß die Zylinderkammern (18 - 23) über einen Auslaß (34, 35) für jede Kammer mit einem gemeinsamen Kanal (42) in Verbindung stehen, der mit einem zentralen Auslaß für die Abgabe des Druckmediums über Drosselmittel (43) in Verbindung steht, die in dem zentralen Auslaß vorgesehen ist, daß jeder Auslaß (34, 35) von den Zylinderkammern ein Rückschlagventil (40) aufweist, welches einen Rückstrom des Druckmediums an die Zylinderkammern vermeidet, und daß jeder Kolben mit der erwähnten geneigten Fläche derart zusammenwirken kann, daß bei einer Torsionsbewegung der geneigten Fläche relativ zu den Kolben die geneigte Fläche wenigstens einen der Kolben in seine Zylinderkammer (18 - 23) gegen das unter Druck stehende Fluid drückt, welches unter Druck steht, um der Kolbenbewegung entgegenzuwirken, die durch den geringsten Unterschied in der abweichenden Relativgeschwindigkeit zwischen den beiden erwähnten Wellen verursacht ist, wobei die erwähnte Torsionsbewegung die erwähnte axiale Bewegung des rotierbaren Elementes verursacht und hierdurch einen Bremseingriff zwischen den erwähnten Bremsmitteln bewirkt.

2. Vorrichtung nach Anspruch 1, dadurch gekennzeichnet, daß die Fähigkeit der Kolben für das Pressen steuerbar ist, und zwar durch eine steuerbare axiale Verschiebbarkeit des Elementes und dementsprechend durch eine Steuerbarkeit der Bremswirkung der Bremsmittel aufgrund der Zusammenwirkung der Kolben und der schrägen Fläche.

3. Vorrichtung nach Anspruch 1, dadurch gekennzeichnet, daß das rotierende Element (64) die erwähnten ersten Bremsmittel (15) trägt.

4. Vorrichtung nach Anspruch 1, dadurch gekennzeichnet, daß an jede Zylinderkammer (18 - 23) ein Einlaß (26 - 30) führt, der mit einem Rückschlagventil (41) versehen ist, welches einen Fluß des Druckmediums in die Zylinderkammer ermöglicht, jedoch einen Fluß aus dieser Zylinderkammer verhindert.

5. Vorrichtung nach Anspruch 1 und 2, dadurch gekennzeichnet, daß die Drosselmittel (43) steuerbar sind, und zwar um die Gegenkraft der Kolben bei ihrem Zurückpressen zu steuern.

## Revendications

1. Dispositif servant à limiter les mouvements de rotation relatifs entre deux arbres rotatifs (1, 2), comprenant au moins un premier dispositif de freinage (15) qui tourne avec l'un des arbres mentionnés, et au moins un second dispositif de freinage (14) qui tourne avec un carter rotatif (4) conçu pour coopérer de manière à entraîner l'autre desdits arbres, lesdits deux dispositifs de freinage étant conçus pour être réglés entre une position de libération et une position de contact de telle manière que, en cas de mouvement de rotation relatif entre les deux arbres, les dispositifs de freinage puissent être amenés en contact de freinage l'un avec l'autre pour limiter ledit mouvement de rotation relatif, caractérisé en ce que l'un des arbres comporte un élément (10, 58, 64) capable de tourner avec ledit arbre et qui contient une surface inclinée qui s'écarte légèrement d'une position perpendiculaire à l'axe longitudinal dudit arbre, en ce que ledit élément est relié au dispositif de freinage (15) qui appartient à l'arbre mentionné, lequel dispositif de freinage suit les mouvements dudit élément rotatif, en ce que ledit élément est légèrement mobile axialement par rapport au dispositif de freinage (14) qui appartient à l'autre arbre, en ce qu'un dispositif, relié à au moins l'un des arbres et tournant avec lui, comprend des pistons (24, 25) placés chacun dans une chambre cylindrique avec un fluide comprimé et mobiles par rapport à la surface inclinée mentionnée ci-dessus, en ce que les chambres cylindriques (18-23) communiquent par une sortie (34, 35) pour chaque chambre avec un canal commun (42) qui communique avec une sortie centrale pour évacuer un fluide comprimé par l'intermédiaire d'un dispositif d'étranglement (43) situé dans la sortie centrale, en ce que chaque sortie (34, 35) des chambres cylindriques comporte un clapet anti-retour (40) conçu pour empêcher un reflux de fluide comprimé vers les chambres cylindriques et en ce que chaque piston est capable de coopérer avec la surface inclinée mentionnée de telle manière que, en cas de mouvement de torsion de la surface inclinée par rapport aux pistons, la surface inclinée force au moins l'un des pistons dans sa chambre cylindrique (18-23) contre le fluide comprimé qui est comprimé pour résister au mouvement des pistons provoqué par la plus petite différence de variation de vitesse relative entre les deux arbres mentionnés, ledit mouvement de torsion provoquant le mouvement axial mentionné de l'élément rotatif et donc un contact de freinage entre lesdits dispositifs de freinage.

2. Dispositif selon la revendication 1, caractérisé en ce que l'aptitude des pistons à l'action de compression est contrôlable et implique une capacité de déplacement axial contrôlable dudit élément et, par conséquent, une action de freinage des dispositifs de freinage du fait de ladite coopération entre les pistons et la surface oblique.

3. Dispositif selon la revendication 1, caractérisé en ce que ledit élément rotatif (64) porte ledit premier dispositif de freinage (15).

4. Dispositif selon la revendication 1, caractérisé en ce qu'une entrée (26-30), munie d'un clapet anti-retour (41) conçu pour permettre un écoulement de fluide comprimé vers la chambre cylindrique mais pour empêcher un reflux depuis la chambre cylindrique, conduit à chaque chambre cylindrique (18 -23).

5. Dispositif selon les revendications 1 et 2, caractérisé en ce que ledit dispositif d'étranglement (43) est contrôlable afin de contrôler la résistance des pistons à une action de compression en retour.

FIG.1

*FIG.2*

FIG.3

FIG. 4